# EUROPEAN PATENT APPLICATION

(11) **EP 2 897 092 A1**
(43) Date of publication of application: **22.07.2015**
(21) Application number: 14196050.0
(22) Date of filing: 03.12.2014
(51) Int. Cl.: G06Q 10/10

(54) **Event notification system, event notification method, and scene playing unit**

(30) Priority: 20.01.2014 CN 201410025025
(71) Applicant: Optoma Coporation, New Taipei City 23143 (TW)
(72) Inventor: Hsieh, Tsung-Hsien, 23143 New Taipei City (TW); Cheng, Po-Wen, 23143 New Taipei City (TW); Lu, Yi-Chun, 23143 New Taipei City (TW); Chu, Ya-Cherng, 23143 New Taipei City (TW)
(74) Representative: Ter Meer Steinmeister & Partner

(57) **Abstract**

An event notification system, an event notification method, and a scene playing unit are provided. The event notification system includes a scene playing unit, a sound and light control unit, and a processing unit. The sound and light control unit controls the scene playing unit to play at least one of a scene light and a scene sound. The processing unit executes a communication service module. The communication service module creates, edits or receives scene setting data, edits a notification event used for indicating a notification time, generates a scene event according to the scene setting data and the notification event, and drives the sound and light control unit to control the scene playing unit to play at least one of the scene light and the scene sound at the notification time according to the scene event. A personalized scene sound and light effect at the notification time is played.

## Description

### CROSS-REFERENCE TO RELATED APPLICATION

This application claims the priority benefit of China application serial no. 201410025025.7, filed on January 20, 2014. The entirety of the above-mentioned patent application is hereby incorporated by reference herein and made a part of this specification.

### BACKGROUND

### Technical Field

The invention relates to an electronic system, a notification control method thereof, and a scene playing unit. Particularly, the invention relates to an event notification system, an event notification method thereof, and a scene playing unit.

### Related Art

Along with quick development of technology, communication services are widely used in people's daily life, for example, people are used to record important events in a calendar in the past, and now the conventional calendar is gradually replaced by a network calendar function in mobile devices such as smart phones, tablet personal computers (PC), etc. Since the mobile devices provides better convenience, many businessmen use the network calendar to remind themselves related events. Patents related to schedule notification are Taiwan utility model Patent No. M413068 and M399368. However, such type of notification message generally uses a preset image or sound, and a notification effect is limited.

### SUMMARY

The invention provides an event notification system, an event notification method, and a scene playing unit, by which a personalized scene sound and light effect is played according to scene setting data at a notification time.

Other objects and advantages of the invention may be further illustrated by the technical features broadly embodied and described as follows.

In order to achieve one or a portion of or all of the objects or other objects, an embodiment of the invention provides an event notification system including a scene playing unit, a sound and light control unit, and a processing unit. The sound and light control unit controls the scene playing unit to play at least one of a scene light and a scene sound. The processing unit executes a communication service module, the communication service module creates, edits or receives scene setting data, edits a notification event used for indicating a notification time, generates a scene event according to the scene setting data and the notification event, and drives the sound and light control unit to control the scene playing unit to play at least one of the scene light and the scene sound at the notification time according to the scene event.

In an embodiment of the invention, the communication service module includes a service interface module and a scene play scheduling module. The service interface module creates, edits or receives the scene setting data. The scene play scheduling module edits the notification event used for indicating the notification time, generates the scene event according to the notification event and the scene setting data come from the service interface module, and provides the scene event to the sound and light control unit.

In an embodiment of the invention, the service interface module includes an Internet calendar service module, a mobile phone short message service module, an email service module, an instant messaging service module or a community interactive website service module.

In an embodiment of the invention, the communication service module is a scene play scheduling module, and the scene play scheduling module creates, edits or receives the scene setting data, edits the notification event used for indicating the notification time, generates the scene event according to the notification event and the scene setting data, and provides the scene event to the sound and light control unit.

In an embodiment of the invention, the scene play scheduling module includes an Internet calendar service module.

In an embodiment of the invention, the communication service module has a first scene play scheduling module, the event notification system further includes another processing unit, the other processing unit executes another communication service module having a second scene play scheduling module, and the first scene play scheduling module generates the scene event to the second scene play scheduling module according to the notification event and the scene setting data.

In an embodiment of the invention, the communication service module transceives the scene setting data, and the communication service module has a first scene play scheduling module. The event notification system further includes another processing unit, the other processing unit executes another communication service module having a second scene play scheduling module, and the first scene play scheduling module provides the scene setting data to the second scene play scheduling module.

In an embodiment of the invention, the scene setting data in the scene event generated by the communication service module is stored in a storage unit or attached to the scene event.

In an embodiment of the invention, the storage unit is a network storage space.

In an embodiment of the invention, the scene playing unit includes at least one of a scene light source and a scene sound source. The scene light source generates the scene light, and the scene sound source generates the scene sound.

An embodiment of the invention provides an event notification method including following steps, wherein the event notification method is adapted to a scene playing unit. Scene setting data is created, edited or received according to a control instruction. A notification event is edited according to a schedule edit instruction, wherein the notification event is used for indicating a notification time. A scene event is generated according to the scene setting data and the notification event. The scene playing unit is controlled to play at least one of a scene light and a scene sound at the notification time according to the scene event.

In an embodiment of the invention, the step of editing the notification event according to the schedule edit instruction includes editing the notification time to control the scene playing unit to perform instant play or scheduling play.

In an embodiment of the invention, the control instruction is executed by a service interface module, and the service interface module includes an Internet calendar service module, a mobile phone short message service module, an email service module, an instant messaging service module or a community interactive website service module.

In an embodiment of the invention, the control instruction and the schedule edit instruction are executed by a scene play scheduling module, and the scene play scheduling module includes an Internet calendar service module, a computer application or software.

In an embodiment of the invention, the event notification method further includes transceiving the scene setting data.

In an embodiment of the invention, the event notification method further includes storing the scene setting data of the scene event in a storage unit or attaching the scene setting data to the scene event.

The invention provides a scene playing unit, wherein the scene playing unit is controlled by a processing unit to execute a communication service module to play at least one of a scene light and a scene sound at a notification time. The communication service module creates, edits or receives scene setting data, and edits a notification event used for indicating the notification time, and the communication service module generates a scene event according to the scene setting data and the notification event.

According to the above descriptions, in the embodiments of the invention, the scene event is generated according to the scene setting data used for indicating a scene characteristic and the notification event used for indicating the notification time to play at least one of the scene light and the scene sound at the notification time according to the scene setting data, so that personalized scene sound and light effect may be played when message is shared or invitation is transmitted between/among different users, so as to enhance an interactive relationship between/among the users.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of an event notification system according to an embodiment of the invention.
FIG. 2A and FIG. 2B are schematic diagrams of communication service modules according to two embodiments of the invention.
FIG. 3 is a flowchart illustrating an event notification method according to an embodiment of the invention.
FIG. 4 is a flowchart illustrating an event notification method according to another embodiment of the invention.

### DETAILED DESCRIPTION OF DISCLOSED EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

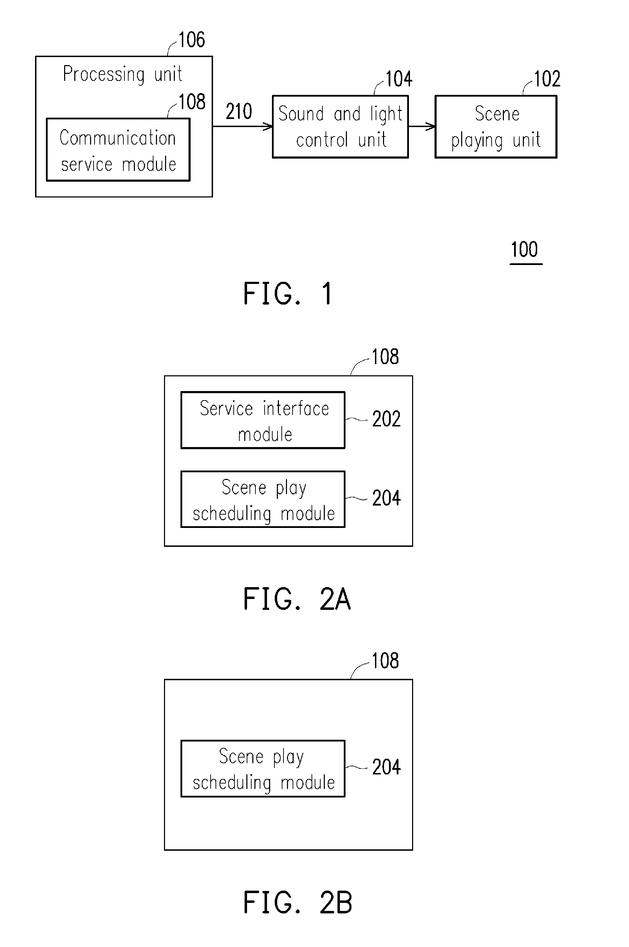

In an embodiments of the invention, a scene playing unit is controlled by a received scene event to play, such that the scene playing unit is capable of playing at least one of a scene light and a scene sound according to a notification event used for indicating the notification time and scene setting data used for indicating a scene characteristic. In detail, referring to FIG. 1, the event notification system 100 includes a scene playing unit 102, a sound and light control unit 104, and a processing unit 106. The sound and light control unit 104 is connected to the scene playing unit 102 through a wired or wireless manner, and the sound and light control unit 104 is connected to the processing unit 106 through the wired or wireless manner, wherein the sound and light control unit 104 receives a scene event 210 provided by the processing unit 106. The scene playing unit 102 is configured to play at least one of a scene light and a scene sound according to the scene event 210, wherein the scene event 210 has scene setting data used for indicating a characteristic of the scene light and/or the scene sound played by the scene playing unit 102 and a notification event (not shown) used for indicating a notification time.

Further, the scene playing unit 102 includes at least one of a scene light source and a scene sound source, wherein the scene light source may generate the scene light, and the scene sound source may generate the scene sound. In detail, the scene playing unit 102 is, for example, an illumination system, an audio system, a speaker, an imaging system, a computer system, a mobile phone, a multimedia player, etc., which is used for outputting sounds and/or color beams, though the invention is not limited thereto. The scene light source is, for example, a device capable of emitting light, changing color or imaging, such as a lamp, an imaging device (for example, a projector, a self-luminous display, a non-self-luminous display, a transmissive display panel, a reflective display panel, a semi-transflective display panel, a digital camera, a video camera, etc.), a computer (for example, a desktop computer, a notebook computer, a tablet PC, etc.), a mobile phone, an image player, a multimedia player, etc. The scene sound source is, for example, a device capable of generating sounds such as an audio device, a speaker, a multimedia player, an MP3 player, an electronic musical instrument, a projector, a computer, a mobile phone, etc.

The processing unit 106 of the embodiment is configured for executing a communication service module 108, wherein the processing unit 106 is, for example, a device used by a personal computer or a network server, such as a central processing unit (CPU), a graphics processing unit (GPU), or other programmable microprocessor, digital signal processor (DSP), etc. The communication service module 108 is, for example, a program code segment written in a computer program language and includes a plurality of instructions. The communication service module 108 may further create, edit or/and receive the scene setting data according to a control instruction of the user (for example, the user logs in by using a user account and password to receive/write/send a message, etc.) and a schedule edit instruction, edit a notification event used for indicating a notification time, generate a scene event 210 according to the scene setting data and the notification event, and drive the sound and light control unit 104 to control the scene playing unit 102 to play at least one of the scene light and the scene sound at the notification time according to the scene event 210. In the embodiment, the scene setting data in the scene event 210 generated by the communication service module 108 may be stored in a storage unit or attached to the scene event 210, wherein the storage unit may be a network storage device/space (not shown).

In this way, by executing the communication service module 108 through the processing unit 106 to create, edit or/and receive the scene setting data, by generating the scene event 210 according to the scene setting data and the notification event, and by playing at least one of the scene light and the scene sound based on the scene setting data at the notification time indicated by the notification event according to the scene event 210, a personalized scene sound and light effect may be played when a message is shared or an invitation is transmitted between/among different users, so as to rich the interaction between/among users.

In detail, the scene setting data mentioned above is, for example, an audio video interleave (AVI) format file with high compatibility, though the invention is not limited thereto In other embodiments, the scene setting data may also be a moving picture experts group (MPEG) format file, a 3GP format file, an MPG format file, a windows media video (WMV) format file, a flash video (FLV) format file, a shockwave flash (SWF) format file, a real video format file, a windows media audio (WMA) format file, a waveform audio (WAV) format file, an adaptive multi-rate compression (AMR) format file, an advanced audio coding (AAC) format file, an OGG format file, a multimedia container format (MCF) file, a QuickTime format file, a joint photographic experts group (JPEG) format file, a bitmap (BMP) format file, a portable network graphics (PNG) format file, a tagged image file formation (TIFF) format file, an icon (ICO) format file, a graphics interchange (GIF) format file, a Truevision tagged graphics (TARGA) format file, etc., though the invention is not limited thereto.

The content of the scene setting data includes message of the scene light and the scene sound, for example, a filmlet, a light show or a text show including rich color and sound variation, etc. In detail, the scene setting data may have at least one attribute parameter, for example, a light attribute parameter and/or sound attribute parameter. The light attribute parameter may be a pixel number, a pixel location, a pixel color, a resolution, a color deep, a frame or a frame rate, etc., and the sound and light control unit 104 may control the characteristic of the scene light emitted by the scene light source according to the attribute parameter in the scene setting data. The scene setting data may also include at least one sound track, and each of the sound tracks may have at least one attribute parameter, for example, a track number, a frequency distribution, etc. In this way, the sound and light control unit 104 may control the characteristic of the scene sound emitted by the scene sound source according to the scene setting data.

Since various electronic devices may be used to create, edit or/and obtain the scene setting data, the user may easily use the electronic devices to create, record, edit, store, share or/and exchange the scene setting data, so as to share favourite scene settings with others. In the embodiment, the scene setting data is, for example, provided by a thumb drive, a removable/portable hard disk, a memory card, a digital camera, a video camera, an MP3 player, a mobile phone, etc. that has a storage device such as a removable/portable storage device, a hard disk, etc., or provided through a network storage space, a network streaming (for example, audio streaming and/or video streaming service, for instance, a network service such as Pandora, Youtube, etc.), or provided through data transmission such as email, instant messaging, a community/social website, an Internet calendar service (ICS), etc.

Referring to FIG. 2A, in the embodiment, the communication service module 108 includes a service interface module 202 and a scene play scheduling module 204. The service interface module 202 includes an Internet calendar service (ICS) module, a mobile phone short message service (SMS) module, an email service module, an instant messaging service module or a community/social interactive website service module. In this way, the service interface module 202 may receive the scene setting data. However, the service interface module 202 may further include a scene setting data source for providing the scene setting data. In this way, the service interface module 202 may further create or/and edit the scene setting data. The scene setting data source is, for example, provided by a thumb drive, a removable/portable hard disk, a memory card, a digital camera, a video camera, an MP3 player, a mobile phone, etc. that has a storage device such as a removable/portable storage device, a hard disk, etc., or provided through a network storage space, a network streaming (for example, audio streaming and/or video streaming service, for instance, a network service such as Pandora, Youtube, etc.), or provided through data transmission such as email, instant messaging, a community/social website, an ICS, etc.

On the other hand, the scene play scheduling module 204 edits the notification event used for indicating the notification time, and generates the scene event 210 according to the notification event and the scene setting data come from the service interface module 202. In the embodiment, the notification time edited by the scene play scheduling module 204 may drive the sound and light control unit 104 to control the scene playing unit 102 to perform instant play or scheduling play. For example, the scene play scheduling module 204 may edit the notification time to zero, such that the scene playing unit 102 may instantly play the scene sound and/or scene light; or the notification time may be edited to a certain moment in the future, such that the scene playing unit 102 may play the scene sound and/or scene light at the moment.

In case that the service interface module 202 and the scene play scheduling module 204 are both ICS modules for example, the notification event is, for example, a schedule reminder of the invitation event in the ICS sent or received by the user, and setting parameters of the schedule reminder may include a notification time, a notification frequency or/and a notification manner, etc. In an embodiment, the scene play scheduling module 204 may store the scene setting data of the scene event 210 in the network storage space, and describe a hyper link of the scene setting data in the scene event 210. Moreover, in some embodiments, the scene play scheduling module 204 may also attach the scene setting data to the scene event 210. However, the service interface module 202 and the scene play scheduling module 204 are not limited to be the ICS modules. For example, the service interface module 202 may be a mobile phone short message service module, an email service module, an instant messaging service module or a community/social interactive website service module, etc. The scene play scheduling module 204 may be a computer application, program or software capable of receiving and/or editing the scene setting data, and edit the notification event used for indicating the notification time and further generate the scene event 210 to the sound and light control unit 104 according to the notification event and the scene setting data, as that shown in FIG. 1.

In the embodiment, when the user activates the Internet calendar, the sound and light control unit 104 may actively inquire a personal calendar of the user, download the scene setting data, and control the scene playing unit 102 to play according to the notification event used for indicating the notification time, wherein the method of downloading the scene setting data to play includes instant play or scheduling play. In detail, the sound and light control unit 104 may control the scene playing unit 102 to perform instant play through the network streaming (for example, an audio streaming and/or video streaming service) or download the scene setting data firstly to wait till the notification time to control the scene playing unit 102 to play thereat, when the sound and light control unit 104 receives the schedule reminder of the calendar. Moreover, the sound and light control unit 104 may download the scene setting data from the network storage space according to the hyper link of the scene setting data in the scene event 210, and may obtain the attached scene setting data from the scene event 210. In this way, the sound and light control unit 104 may control the scene playing unit 102 to play at least one of the scene light and the scene sound according to the scene event 210 having the scene setting data and the notification time, such that the user may enjoy the personalized schedule notification.

According to the above descriptions, when the user edits the notification time of the communication service module 108, the scene play scheduling module 204 may be used to drive the sound and light control unit 104 to control the scene playing unit 102 to perform instant play, so as to achieve an effect of inspecting a play effect corresponding to the scene setting data or immediately enjoying the scene sound and light effect corresponding to the scene setting data. In other embodiments, to play at a certain notification time in the future through scheduling may be achieved.

Referring to FIG. 2B, a difference between the communication service module 108 of the embodiment and the communication service module 108 of the embodiment of FIG. 2A is that the communication service module 108 is the scene play scheduling module 204, i.e. the communication service module 108 of the embodiment does not have the service interface module 202 of FIG. 2A. In the embodiment, the scene play scheduling module 204 is, for example, a computer application, program or software capable of creating the scene setting data, and may further edit the notification event used for indicating the notification time and generate the scene event 210 to the sound and light control unit 104 according to the notification event and the scene setting data.

It should be noticed that the event notification system 100 illustrated in FIG. 1 includes only one processing unit 106 for example. However, in other embodiments, the event notification system 100 may include a plurality of processing units 106, wherein the processing units 106 may be processors of a plurality of different electronic devices, i.e. the scene play scheduling module 204 in each of the processing units 106 may be executed by different electronic devices, for example, different mobile phones, computers (for example, desktop computers, notebook computers, tablet computers), projectors, etc. The scene play scheduling module 204 in each electronic device may generate the scene event 210 according to the scene setting data (which may be created, edited or/and received by the service interface module 202, or may be created, edited or/and received by the scene play scheduling module 204 itself) and the notification event, and transmit the scene event 210 to the other scene play scheduling modules 204. In this way, the scene play scheduling module 204 of any of the electronic devices may transmit the scene event 210 to the scene play scheduling modules 204 of the other electronic devices. Alternatively, in some embodiments, after the scene play scheduling module 204 of any of the electronic devices creates/edits the scene setting data or receives the scene setting data from the service interface module 202, the scene setting data is transmitted to the scene play scheduling modules 204 of the other electronic devices. Therefore, since the scene play scheduling module 204 in any of the electronic devices may provide the scene setting data or the scene event 210 to the scene play scheduling module(s) 204 of the other electronic device(s), the scene setting data or the scene event 210 may be shared, so as to facilitate exchange of the scene play data between/among different users.

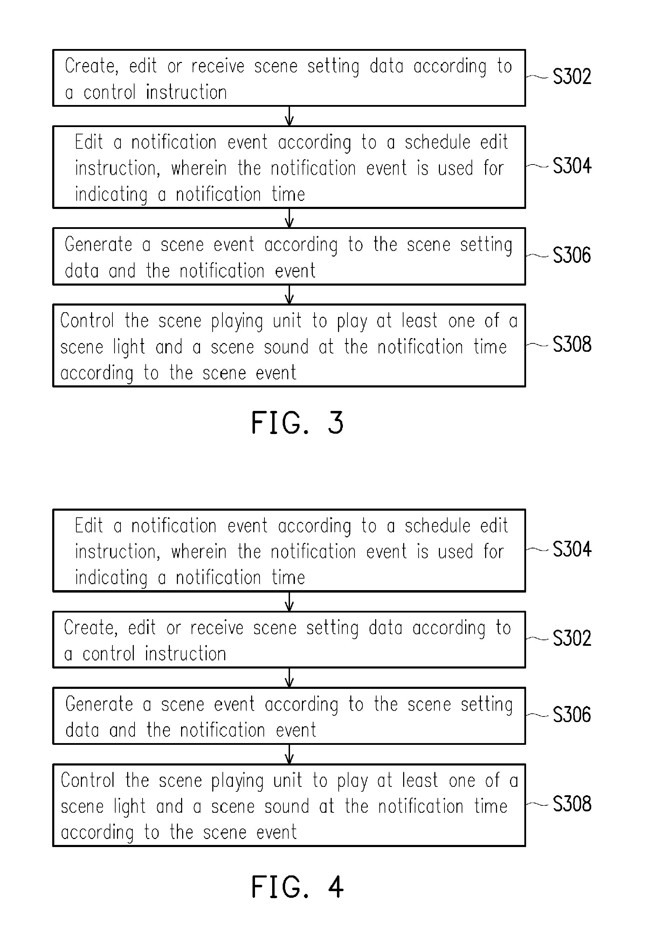

Referring to FIG. 3, the event notification method of the embodiment may be summed up to include following steps. First, scene setting data is created, edited or received according to a control instruction (step S302), wherein the control instruction is executed by the service interface module, and the service interface module is, for example, an ICS module, a mobile phone short message service, an email service module, an instant messaging service module or a community/social interactive website service module, etc. Then, a notification event is edited according to a schedule edit instruction, wherein the notification event is used for indicating a notification time (step S304). In this way, the scene playing unit is controlled to perform instant play or scheduling play. Thereafter, a scene event is generated according to the scene setting data and the notification event (step S306). In the embodiment, the scene setting data in the scene event may be stored in a storage unit (for example, a network storage device/space) or attached to the scene event, though the invention is not limited thereto. After that, the scene playing unit is controlled to play at least one of a scene light and a scene sound at the notification time further according to the scene event (step S308).

It should be noticed that in some embodiments, the control instruction and the schedule edit instruction may be executed by the communication service module, wherein the communication service module may be implemented by an Internet calendar service module. Moreover, in other embodiments, an executing sequence of the step S302 and the step S304 may be inversed, i.e. edition of the notification event is first executed, and then creation, edition or reception of the scene setting data is executed (shown in FIG. 4).

However, in other embodiments, a step of transceiving the scene setting data may be performed to achieve an effect of sharing the scene setting data, or a step of sharing the scene event may be performed. For example, the scene setting data or the scene event come from the service interface module or the scene play scheduling module may be transmitted to the other scene play scheduling module, so as to share the scene setting data or the scene event to facilitate exchange of the scene play setting between/among different users.

In summary, in the embodiments of the invention, by creating, editing or/and receiving the scene setting data and editing the scene event used for indicating the notification time, the scene event is generated according to the scene setting data and the notification event to play accordingly at least one of the scene light and the scene sound at the notification time. In this way, the user may enjoy a customized scene reminding at an accurate time. In the embodiment of the invention, the notification event used for indicating the notification time may be edited through a computer application, program, software or an ICS module, so as to facilitate setting an accurate reminding time for the user. In the embodiment of the invention, any scene play scheduling module may provide the scene setting data or the scene event to another or the other scene play scheduling module(s), so as to achieve an effect of sharing/exchanging the scene setting data or the scene event between/among different users and further enhance an interactive relationship between/among the users.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. An event notification system, comprising:
a scene playing unit;
a sound and light control unit, controlling the scene playing unit to play at least one of a scene light and a scene sound; and
a processing unit, executing a communication service module, wherein the communication service module creates, edits or receives scene setting data, edits a notification event used for indicating a notification time, generates a scene event according to the scene setting data and the notification event, and drives the sound and light control unit to control the scene playing unit to play at least one of the scene light and the scene sound at the notification time according to the scene event.

2. The event notification system as claimed in claim 1, wherein the communication service module comprises:
a service interface module, creating, editing or receiving the scene setting data; and
a scene play scheduling module, editing the notification event used for indicating the notification time, generating the scene event according to the notification event and the scene setting data come from the service interface module, and providing the scene event to the sound and light control unit.

3. The event notification system as claimed in claim 2, wherein the service interface module comprises an Internet calendar service module, a mobile phone short message service module, an email service module, an instant messaging service module or a community interactive website service module.

4. The event notification system as claimed in claim 1, wherein the communication service module is a scene play scheduling module, and the scene play scheduling module creates, edits or receives the scene setting data, edits the notification event used for indicating the notification time, generates the scene event according to the notification event and the scene setting data, and provides the scene event to the sound and light control unit.

5. The event notification system as claimed in claim 4, wherein the scene play scheduling module comprises an Internet calendar service module.

6. The event notification system as claimed in claim 1, wherein the communication service module has a first scene play scheduling module, the event notification system further comprises another processing unit, the other processing unit executes another communication service module having a second scene play scheduling module, and the first scene play scheduling module generates the scene event to the second scene play scheduling module according to the notification event and the scene setting data.

7. The event notification system as claimed in claim 1, wherein the communication service module transceives the scene setting data, and the communication service module has a first scene play scheduling module, the event notification system further comprises another processing unit, the other processing unit executes another communication service module having a second scene play scheduling module, and the first scene play scheduling module provides the scene setting data to the second scene play scheduling module.

8. The event notification system as claimed in claim 1, wherein the scene setting data in the scene event generated by the communication service module is stored in a storage unit or attached to the scene event.

9. The event notification system as claimed in claim 8, wherein the storage unit is a network storage space.

10. The event notification system as claimed in claim 1, wherein the scene playing unit comprises at least one of a scene light source and a scene sound source, wherein the scene light source generates the scene light, and the scene sound source generates the scene sound.

11. An event notification method, adapted to a scene playing unit, the event notification method comprising:
creating, editing or receiving scene setting data according to a control instruction;
editing a notification event according to a schedule edit instruction, wherein the notification event is used for indicating a notification time;
generating a scene event according to the scene setting data and the notification event; and
controlling the scene playing unit to play at least one of a scene light and a scene sound at the notification time according to the scene event.

12. The event notification method as claimed in claim 11, wherein the step of editing the notification event according to the schedule edit instruction comprises:
editing the notification time to control the scene playing unit to perform instant play or scheduling play.

13. The event notification method as claimed in claim 11, wherein the control instruction is executed by a service interface module, and the service interface module comprises an Internet calendar service module, a mobile phone short message service module, an email service module, an instant messaging service module or a community interactive website service module.

14. The event notification method as claimed in claim 11, wherein the control instruction and the schedule edit instruction are executed by a scene play scheduling module, and the scene play scheduling module comprises an Internet calendar service module, a computer application or software.

15. The event notification method as claimed in claim 11, further comprising:
transceiving the scene setting data.

16. The event notification method as claimed in claim 11, further comprising:
storing the scene setting data of the scene event in a storage unit or attaching the scene setting data to the scene event.

17. A scene playing unit, controlled by a processing unit to execute a communication service module to play at least one of a scene light and a scene sound at a notification time, wherein the communication service module creates, edits or receives scene setting data, and edits a notification event used for indicating the notification time, and the communication service module generates a scene event according to the scene setting data and the notification event.
